# FASCICULE DE BREVET EUROPEEN

(11) **EP 3 412 036 B1**
(45) Date de publication et mention de la délivrance du brevet: **18.03.2020**
(21) Numéro de dépôt: 17703733.0
(22) Date de dépôt: 06.02.2017
(51) Int. Cl.: H04R 25/00

(54) **PROCÉDÉ D'AIDE AU SUIVI D'UNE CONVERSATION POUR PERSONNE MALENTENDANTE**
VERFAHREN ZUR UNTERSTÜTZUNG EINER HÖRGESCHÄDIGTEN PERSON BEIM FOLGEN EINES GESPRÄCHS
METHOD FOR ASSISTING A HEARING-IMPAIRED PERSON IN FOLLOWING A CONVERSATION

(30) Priorité: 05.02.2016 FR 1650930
(43) Date de publication de la demande: 12.12.2018
(73) Titulaire: Guedon, Christophe, 92500 Rueil Malmaison (FR)
(72) Inventeur: Guedon, Christophe, 92500 Rueil Malmaison (FR)
(74) Mandataire: Regimbeau
(86) Numéro de dépôt international: PCT/EP2017/052533
(87) Numéro de publication internationale: WO 2017/134300

(56) Documents cités:
- US-A1- 2002 103 649
- US-A1- 2004 172 255
- US-A1- 2010 092 005
- US-A1- 2011 063 405
- US-A1- 2013 144 622
- US-A1- 2013 300 648
- US-A1- 2014 064 501
- US-B1- 6 593 956
- US-B1- 7 117 157
- BETLEHEM TERENCE ET AL: "Personal Sound Zones: Delivering interface-free audio to multiple listeners", IEEE SIGNAL PROCESSING MAGAZINE, IEEE SERVICE CENTER, PISCATAWAY, NJ, US, vol. 32, no. 2, 1 mars 2015 (2015-03-01), pages 81-91, XP011573085, ISSN: 1053-5888, DOI: 10.1109/MSP.2014.2360707 [extrait le 2015-02-10]

## Description

### DOMAINE TECHNIQUE GENERAL

L'invention a pour objet le domaine de l'aide aux personnes malentendantes, et concerne plus précisément un procédé d'aide au suivi par une personne malentendante d'une conversation avec des interlocuteurs participant à différentes conversations.

### ETAT DE LA TECHNIQUE

Les personnes malentendantes sont généralement équipées de prothèses auditives réalisant une amplification des sons afin de compenser leurs difficultés d'audition.

De telles prothèses sont bien adaptées au suivi d'une conversation avec un nombre restreint d'interlocuteurs dans un environnement calme mais une personne malentendante peut continuer à avoir du mal à suivre une conversation, malgré l'utilisation de telles prothèses, dans un environnement dans lequel de nombreux bruits parasites peuvent se superposer à la conversation. Une telle situation peut se présenter lorsque la conversation a lieu dans un environnement bruyant, par exemple dans la rue ou dans une salle dans laquelle de nombreuses personnes parlent de manière simultanée, telle qu'une cantine.

Certains systèmes d'aide aux malentendants existants permettent à une personne malentendante de sélectionner des interlocuteurs de son choix afin que seules les paroles de ces interlocuteurs lui soient restituées, sous forme vocale amplifiée ou textuelle par exemple, comme décrit dans le document US2013/144622. La personne malentendante peut ainsi se focaliser sur une conversation en cours et ignorer les propos des personnes de son environnement participant à d'autres conversations qu'elle ne désire pas suivre.

De tels systèmes présentent néanmoins le défaut de requérir une sélection manuelle des interlocuteurs à suivre ou à ignorer. Un tel défaut peut se révéler particulièrement gênant dans le cas où de nouveaux interlocuteurs entrent régulièrement dans la conversation, ou au contraire la quitte, ou bien encore dans le cas d'interlocuteurs participant à plusieurs conversations en même temps.

Si elle veut pouvoir continuer à suivre uniquement une seule conversation et à comprendre les propos de tous les interlocuteurs participant à cette conversation, mais uniquement leurs propos relatifs à cette conversation, une personne malentendante utilisant un système existant devra alors régulièrement corriger la sélection des interlocuteurs à suivre afin d'exclure les interlocuteurs participant, même temporairement, à une autre conversation, et d'inclure les interlocuteurs entrant, éventuellement à nouveau, dans la conversation. Une telle correction régulière de sélection peut s'avérer fastidieuse du fait de l'attention et des efforts requis, et peut même empêcher la personne malentendante de comprendre tous les propos de la conversation et d'y participer elle-même.

Il existe donc un besoin d'un procédé d'aide à la conversation pour une personne malentendante permettant à celle-ci de suivre efficacement une conversation en cours même lorsque les interlocuteurs participant à cette conversation changent régulièrement et/ou participent à d'autres conversations, sans requérir de la personne malentendante une attention ou un effort important pour la mise en oeuvre dudit procédé.

### PRESENTATION DE L'INVENTION

La présente invention se rapporte ainsi selon un premier aspect à un procédé d'aide au suivi d'une conversation avec une pluralité d'interlocuteurs, chacun susceptible d'appartenir à au moins un groupe de conversation, pour une personne malentendante munie d'un équipement informatique,
ledit équipement informatique étant relié à au moins un module d'émission de voix constité par des haut-parleurs directifs, au moins un dispositif d'affichage, à au moins un module de conversion de signaux voix en signaux texte et à au moins un système de détection d'activité vocale,
ledit procédé comprenant les étapes suivantes mises en oeuvre par ledit équipement informatique:
- acquisition d'un signal représentatif d'une activité vocale d'un premier interlocuteur parmi la pluralité d'interlocuteurs, à l'aide dudit système de détection d'activité vocale,
- acquisition d'un signal caractérisant un comportement d'un deuxième interlocuteur parmi la pluralité d'interlocuteurs en réaction à ladite activité vocale dudit premier interlocuteur,
- détermination d'une appartenance du premier et du deuxième interlocuteur à un même groupe de conversation, dit premier groupe de conversation, en fonction des signaux acquis pour le premier interlocuteur et le deuxième interlocuteur,
- sélection du premier groupe de conversation parmi lesdits groupes de conversation,
- détermination d'un mode de restitution vocal pour ledit premier groupe de conversation sélectionné,
- transmission, au module d'émission de voix de signaux voix acquis pour les interlocuteurs appartenant au premier groupe de conversation sélectionné, pour émission desdits signaux voix,
l'étape de transmission comprenant en outre la :
- localisation de la personne malentendante par le système de localisation,
- détermination par le module d'émission d'au moins une zone d'émission des signaux voix à proximité de la localisation de la personne malentendante, parmi une pluralité de zones d'émission, une zone d'émission une zone d'émission étant associée à au moins un haut-parleur,
- allocation d'au moins une zone d'émission parmi les zones déterminées préalablement à la personne malentendante par le module d'émission, et
- émission des signaux voix dans ladite zone.

Par ailleurs, le procédé peut comprendre les caractéristiques suivantes :
- une zone d'émission est allouée à ladite personne malentendante, si celle-ci n'est pas préalablement allouée à une seconde personne,
- l'étape d'allocation par le module d'émission d'au moins une zone d'émission comprend l'allocation à ladite personne malentendante des zones d'émission entre une première zone allouée à ladite personne malentendante et une seconde zone allouée à une seconde personne,
- ledit équipement informatique est en outre relié à au moins un module de conversion de signaux voix en signaux texte, et met en oeuvre les étapes suivantes :
   - lorsque le mode de restitution textuel a été déterminé pour le premier groupe de conversation : commande de l'affichage, sur le dispositif d'affichage, de signaux texte obtenus par conversion de signaux voix acquis pour les interlocuteurs appartenant au premier groupe de conversation sélectionné, à l'aide du module de conversion de signaux.
- le dispositif d'affichage est un dispositif de projection 3D par hologramme,
- l'équipement informatique de la personne malentendante étant relié à une pluralité de micros géolocalisables configurés pour capturer des signaux voix, les étapes d'acquisition comprennent une phase d'étalonnage préalable de chaque micro de la pluralité de micros en fonction d'une distance et d'une orientation vis à vis de sources sonores, puis lors d'une étape d'acquisition la sélection d'un micro en fonction d'une l'orientation du visage et/ou d'une localisation d'un l'interlocuteur, et de la position et de l'orientation des micros.

Dans un premier mode de mise en œuvre du procédé selon le premier aspect, ledit équipement informatique étant relié en outre à au moins un système de détection d'orientation de visage, et à un équipement de synchronisation configuré pour déterminer une corrélation entre des signaux relatifs à différents interlocuteurs :
- l'étape d'acquisition d'un signal représentatif d'une activité vocale d'un premier interlocuteur comprend une détermination d'une première variable binaire représentative d'une activité vocale dudit premier interlocuteur,
- l'étape d'acquisition d'un signal caractérisant un comportement d'un deuxième interlocuteur comprend une détermination d'une deuxième variable binaire représentative d'une détection d'une orientation du visage du deuxième interlocuteur en direction du premier interlocuteur à l'aide du système de détection d'orientation de visage,
- l'étape de détermination d'une appartenance du premier et du deuxième interlocuteur à un même groupe de conversation comprend une détermination d'une corrélation à l'aide dudit équipement de synchronisation entre lesdites première et deuxième variables.

Dans un deuxième mode de mise en oeuvre du procédé selon le premier aspect, ledit équipement informatique étant relié en outre, à au moins un système de détection d'orientation de regard, et à un équipement de synchronisation configuré pour déterminer une corrélation entre des signaux relatifs à différents interlocuteurs :
- l'étape d'acquisition d'un signal représentatif d'une activité vocale d'un premier interlocuteur comprend une détermination d'une première variable binaire représentative d'une activité vocale dudit premier interlocuteur,
- l'étape d'acquisition d'un signal caractérisant un comportement d'un deuxième interlocuteur comprend une détermination d'une troisième variable binaire représentative d'une détection d'une orientation du regard du deuxième interlocuteur en direction du premier interlocuteur à l'aide du système de détection d'orientation de regard,
- l'étape de détermination d'une appartenance du premier et du deuxième interlocuteur à un même groupe de conversation comprend une détermination d'une corrélation à l'aide dudit équipement de synchronisation entre lesdites première et troisième variables.

Dans un troisième mode de mise en oeuvre du procédé selon le premier aspect :
- l'étape d'acquisition d'un signal caractérisant un comportement d'un deuxième interlocuteur comprend une détermination à l'aide dudit système de détection d'activité vocale d'une activité vocale du deuxième interlocuteur,
- l'appartenance du premier et du deuxième interlocuteur à un même groupe de conversation est déterminée en fonction d'un délai entre une fin d'activité vocale du premier interlocuteur et un début d'activité vocale du deuxième interlocuteur.

Dans une variante de mise en oeuvre, l'équipement informatique de la personne malentendante étant relié à un dispositif de détection de mouvements de la personne malentendante, les étapes de sélection d'un groupe de conversation et/ou de détermination d'un mode de restitution sont mises en oeuvre en fonction d'un mouvement de la personne malentendante détecté par le dispositif de détection de mouvements.

Par ailleurs, une activité vocale d'un interlocuteur peut être déterminée par analyse spectrale de premiers signaux vocaux acquis pour ledit interlocuteur ou par reconnaissance de mots appliquée auxdits premiers signaux vocaux ou par détection d'un mouvement labial dudit interlocuteur.

Selon un deuxième aspect, l'invention concerne un produit programme d'ordinateur comprenant des instructions de code pour l'exécution d'un procédé selon le premier aspect lorsque ce programme est exécuté par un processeur.

Selon un troisième aspect, l'invention concerne un équipement informatique, pour l'aide au suivi d'une conversation avec une pluralité d'interlocuteurs, pour une personne malentendante configuré pour être relié à au moins un module d'émission de voix, à au moins un dispositif d'affichage et à au moins un module de conversion de signaux voix en signaux texte et à au moins un système de détection d'activité vocale, ledit équipement informatique étant en outre configuré pour mettre en oeuvre les étapes du procédé selon le premier aspect.

Selon un quatrième aspect, l'invention concerne un système d'aide au suivi d'une conversation avec une pluralité d'interlocuteurs pour une personne malentendante comprenant : un équipement informatique selon le troisième aspect et un système de détection d'orientation de visage et/ou de regard comprenant au moins une caméra stéréoscopique configurée pour détecter l'orientation du visage et/ou du regard d'un interlocuteur.

Selon un cinquième aspect, l'invention concerne un système d'aide au suivi d'une conversation avec une pluralité d'interlocuteurs pour une personne malentendante comprenant : un équipement informatique selon le troisième aspect et un système de détection d'orientation de visage comprenant au moins un système de géolocalisation et au moins un gyromètre et/ou accéléromètre configurés pour déterminer la localisation d'un interlocuteur et l'orientation de son visage par rapport aux autres interlocuteurs.

Par ailleurs ledit système d'aide au suivi d'une conversation avec une pluralité d'interlocuteurs pour une personne malentendante peut comprendre un dispositif de vibration configuré pour indiquer à la personne malentendante la localisation d'un interlocuteur.

### PRESENTATION DES FIGURES

D'autres caractéristiques et avantages apparaîtront à la lecture de la description qui va suivre d'un mode de réalisation. Cette description sera donnée en référence aux dessins annexés dans lesquels :
- la figure 1 illustre un exemple d'architecture pour la mise en oeuvre du procédé selon un mode de réalisation ;

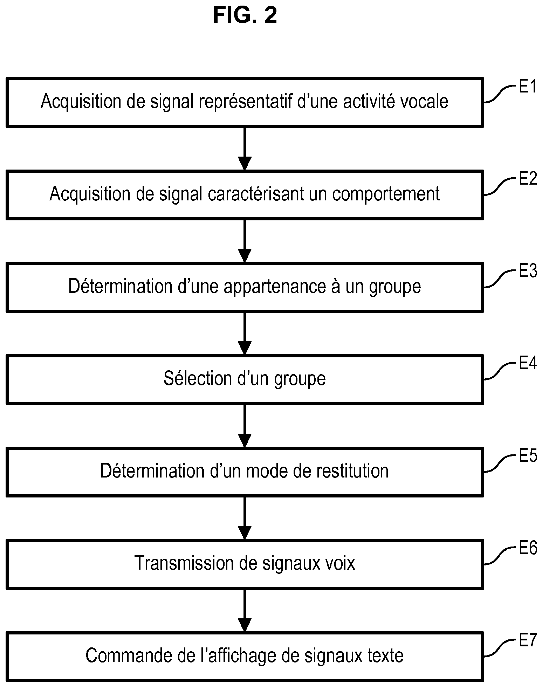

- la figure 2 est un diagramme schématisant une mise en œuvre d'un procédé d'aide au suivi d'une conversation selon l'invention ;

### DESCRIPTION DETAILLEE

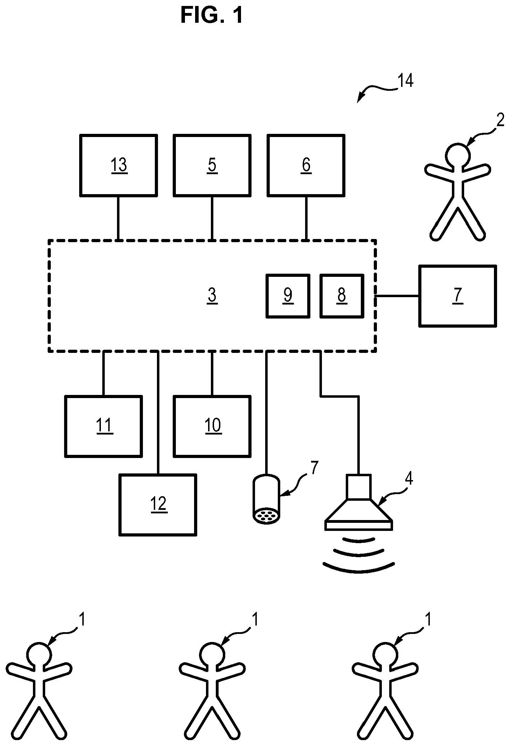

En référence à la **figure 1****,** une mise en oeuvre pour l'invention concerne un procédé d'aide au suivi d'une conversation avec une pluralité d'interlocuteurs 1, pour une personne malentendante 2 munie d'un équipement informatique 3. Chacun de ces interlocuteurs est susceptible d'appartenir à au moins un groupe de conversation.

Ce procédé a pour but de déterminer automatiquement de tels groupes de conversation, regroupant chacun plusieurs interlocuteurs participant à une même conversation. Il a également pour but de permettre à la personne malentendante de sélectionner un ou plusieurs de ces groupes afin que les conversations menées au sein de ces groupes lui soient restituées, par exemple de manière vocale ou de manière textuelle. La détermination automatique de tels groupes, et surtout leur mise à jour, évite à la personne malentendante d'avoir à sélectionner manuellement les interlocuteurs dont elle veut suivre les propos et d'avoir à mettre constamment à jour cette sélection en fonction des interlocuteurs entrant ou sortant d'une conversation.

Pour cela cet équipement informatique 3 est susceptible d'être relié à au moins un module d'émission de voix 4, tel qu'un haut-parleur ou un casque audio, à au moins un dispositif d'affichage 5 tel qu'un écran LCD, à au moins un module de conversion de signaux voix en signaux texte 6, et à au moins un système de détection d'activité vocale 7. L'équipement informatique 3 peut comprendre un module de traitement 8 tel qu'un microprocesseur, et une interface de saisie 9 permettant à la personne malentendante 2 d'opérer une sélection ou de saisir une commande. Selon un mode réalisation, l'interface de saisie est incluse dans le dispositif d'affichage 5 sous forme d'un écran tactile.

L'équipement informatique peut être relié à ces éléments par une ou plusieurs interfaces de communication filaires (câble audio coaxial, interface SPDIF/Toslink, liaison HDMI, VGA, Ethernet etc...) ou sans-fil (Bluetooth, Wifi...). Alternativement tout ou partie de ces éléments peuvent être inclus dans l'équipement informatique lui-même.

L'équipement informatique 3 peut consister en un dispositif portable tel qu'un téléphone intelligent (« smartphone ») ou une tablette. Alternativement, l'équipement informatique 3 peut être intégré à des lunettes sous forme de lunettes à affichage en réalité augmentée. Dans ce cas, les informations délivrées à la personne malentendante 2 peuvent être affichées sur les verres des lunettes utilisés comme dispositif d'affichage 5. La personne malentendante peut alors voir à la fois les informations affichées et son environnement en transparence. Selon une autre variante, l'équipement informatique 3 est partagé entre des lunettes utilisées pour l'affichage et portant certains capteurs, et un dispositif portable comprenant l'unité de traitement, l'interface de saisie et le reste des éléments de l'équipement informatique 3.

Dans une variante de réalisation, le dispositif d'affichage peut comprendre un projecteur capable de projeter les informations à destination de la personne malentendante. Une telle projection peut être réalisée classiquement sur un support de projection, tel qu'un mur ou un écran, ou bien encore en 3D par exemple sous forme d'hologramme. Un hologramme 3D peut être réalisé grâce à un laser infrarouge pulsé, par exemple à 1 kHz, capable d'ioniser les molécules d'air, ledit laser étant couplé avec un scanner 3D afin de refléter dans l'air des informations à des points prédéterminés. Une telle projection, lorsqu'elle a pour but d'afficher un texte correspondant aux propos d'un interlocuteur, peut projeter ce texte à un emplacement dans l'espace aligné avec la personne malentendante et cet interlocuteur, de façon à s'afficher dans le champ de vision de la personne malentendante à proximité de cet interlocuteur.

Pour déterminer l'appartenance des interlocuteurs à un ou plusieurs groupes de conversation, l'invention propose, lors de la prise de parole d'un premier interlocuteur, d'analyser le comportement des autres interlocuteurs pour déterminer s'ils l'écoutent ou s'ils participent à une conversation avec ce premier interlocuteur.

### Système de détection d'activité vocale

Le système de détection d'activité vocale 7 peut être employé pour déterminer une activité vocale du premier interlocuteur, c'est-à-dire une participation à une conversation. Un tel système de détection d'activité vocale peut comporter un ou plusieurs microphones pour capter les voix des interlocuteurs situés dans l'environnement de la personne malentendante. On entendra par microphone un module d'acquisition de signaux sonores, quel que soit la technologie employée pour réaliser une telle acquisition. Un tel microphone peut être directionnel pour réduire la captation des voix d'interlocuteurs non désirés ou du bruit, ou bien bidirectionnel ou omnidirectionnel afin de capturer l'ensemble d'une ambiance sonore. De tels microphones peuvent être installés de manière fixe, par exemple dans une installation d'une salle de conférence ou de restaurant. Ils peuvent également être amovibles et installés par la personne malentendante, voir attachés à celle-ci, par exemple sur un vêtement, ou encore inclus dans l'équipement informatique lui-même. Alternativement, de tels microphones peuvent être portés par chacun des interlocuteurs, par exemple au sein d'un dispositif électronique portable porté par chacun des interlocuteurs.

Les signaux vocaux capturés par de tels microphones peuvent faire l'objet d'une analyse spectrale, par exemple par le système de détection d'activité vocale 7 ou par le module de traitement 8 de l'équipement informatique, afin de déterminer si les signaux analysés sont représentatifs d'une voix humaine, c'est-à-dire si un interlocuteur est en train de parler.

Alternativement, une reconnaissance vocale, c'est-à-dire une reconnaissance de mots, peut être appliquée aux signaux vocaux acquis, afin d'essayer de reconnaitre des mots parmi les sons émis par un interlocuteur. Lorsqu'une telle reconnaissance est positive, l'interlocuteur ayant prononcé ces mots est alors bien en train de prendre part à une conversation.

Alternativement, le système de détection d'activité vocale 7 peut comprendre une ou plusieurs caméras vidéo afin de détecter un mouvement labial du premier interlocuteur, mouvement synonyme d'une prise de parole. La détection d'une activité vocale du premier interlocuteur est alors mise en oeuvre par détection d'un mouvement labial de cet interlocuteur.

### Système de détection d'orientation de visage

Dans un premier mode de réalisation, l'invention propose de détecter les interlocuteurs du premier interlocuteur ayant pris la parole en analysant l'orientation de leur visage. Lorsqu'une personne prend la parole, les personnes écoutant ses propos ont en effet tendance à naturellement se tourner vers celle-ci. L'équipement informatique est alors relié à un système de détection d'orientation de visage 10. Par orientation d'un visage on entend la direction perpendiculaire au plan du visage et passant par le centre de celui-ci.

Un tel système de détection d'orientation de visage peut comprendre au moins une caméra, particulièrement une caméra stéréoscopique, afin de détecter les variations d'orientation du visage des interlocuteurs au cours de la discussion. Un tel système permet de détecter l'orientation du visage des interlocuteurs à distance, de manière non intrusive, et en couvrant un large champ, donc un grand nombre d'interlocuteurs avec une seule caméra.

Alternativement, un tel système de détection d'orientation de visage peut comprendre au moins un capteur configuré pour détecter une variation angulaire du visage (gyromètre, accéléromètre, ...), notamment au moins un gyromètre et/ou accéléromètre monté sur chaque interlocuteur afin de capter leurs mouvements et d'en déduire l'orientation de leur visage. Une telle solution présente l'avantage d'être plus précise car insensible aux conditions environnementales telles que la luminosité ambiante, la présence d'obstacles tels que des meubles ou des rideaux, mais nécessite d'équiper chaque interlocuteur. Selon une autre alternative, un tel système de détection d'orientation de visage peut comprendre un moyen de reconstruction en 3D de visage, tel qu'un scanner 3D (LIDAR, RADAR, ultrason...).

Afin de déterminer la localisation exacte vers laquelle un interlocuteur est orienté pour déterminer s'il est tourné en direction d'un interlocuteur en train de parler, le système de détection d'orientation de visage peut également comprendre au moins un système de géolocalisation afin de déterminer la position exacte des interlocuteurs dans l'environnement de la personne malentendante. Une telle géolocalisation peut être réalisée de manière absolue à l'aide de dispositifs de géolocalisation externes tels que des récepteurs GPS. Une telle géolocalisation peut également être mise en oeuvre à l'aide d'une installation locale. Par exemple, les interlocuteurs peuvent porter des équipements pouvant être positionnés par triangulation par rapport aux points d'accès d'un réseau local sans fil auquel ils sont connectés, tel qu'un réseau Wifi. La géolocalisation d'un équipement peut également être réalisée de façon relative par rapport à d'autres objets dont la position absolue est connue. La position de ces objets peut par exemple être enregistrée dans une base de données de coordonnées d'objets et l'équipement à géolocaliser peut déterminer sa position par rapport à ces objets à l'aide d'un détecteur de type radar. Ces objets peuvent être des objets connectés déclinant leur identité par le biais d'un réseau sans fil. Selon une autre variante, chaque élément à géolocaliser est équipé d'un dispositif de détection de mouvement pouvant par exemple comprendre un accéléromètre trois axes et/ou un gyromètre trois axes et/ou un gyroscope. Lors d'une initialisation, la position de chaque élément à géolocaliser par rapport à un point de référence peut être enregistrée. L'évolution de la position de chaque élément par rapport à ce point de référence peut ensuite être suivie grâce à la détection des mouvements de ces éléments par leur dispositif de détection de mouvement. La géolocalisation à partir d'une base de coordonnées d'objets ou à l'aide d'un dispositif de détection de mouvement peut permettre d'obtenir une précision de localisation plus importante que celle obtenue par une localisation GPS ou Wifi.

Afin de déterminer si un second interlocuteur écoute un premier interlocuteur en train de parler, l'équipement informatique est relié à un équipement de synchronisation 11 configuré pour déterminer une potentielle corrélation entre un signal représentatif d'une activité vocale du premier interlocuteur et un signal représentatif d'une orientation du visage du second interlocuteur en direction du premier interlocuteur. Une telle corrélation indique en effet que le second interlocuteur tourne la tête vers le premier interlocuteur lorsque celui-ci parle, et donc que ces deux interlocuteurs sont engagés dans une même conversation et doivent donc appartenir à un même groupe de conversation. Un tel équipement de synchronisation peut être un dispositif autonome doté d'une mémoire, de moyens de traitements et d'une interface de communication pour communiquer avec l'équipement informatique. Alternativement, l'équipement de synchronisation peut être confondu avec l'équipement informatique et le module de traitement 8 de celui-ci peut être employé pour déterminer une telle corrélation.

### Système de détection d'orientation de regard

Dans un second mode de réalisation, plus précis que le premier mode de réalisation, l'invention propose de détecter les interlocuteurs du premier interlocuteur ayant pris la parole en analysant l'orientation de leur regard. Lorsqu'une personne prend la parole, les personnes écoutant ses propos, à défaut de tourner leur visage vers celle-ci, peuvent au moins la regarder. Une telle situation peut particulièrement se présenter lorsqu'une personne a deux interlocuteurs situés en face d'elle se trouvant en même temps dans son champ de vision. Cette personne peut alors regarder alternativement chacun de ses interlocuteurs, en fonction de leurs prises de paroles dans la conversation, sans changer l'orientation de son visage. L'équipement informatique est alors relié à un système de détection d'orientation de regard 12.

Un tel système de détection d'orientation de visage peut comprendre un système mettant en oeuvre un procédé d'oculométrie (« eye-tracking ») permettant de suivre l'orientation du regard des interlocuteurs, par exemple une ou plusieurs caméras, particulièrement des caméras infrarouges, utilisables pour mettre en oeuvre un tel procédé d'oculométrie (« Eye-tracking »). De telles caméras peuvent être installées à proximité des interlocuteurs, particulièrement dans le cadre d'une installation fixe comme celle d'une salle de conférence, ou bien encore être portées par les interlocuteurs eux-mêmes, par exemple en étant intégrées dans un casque ou des lunettes.

Dans ce second mode de réalisation, le système de détection d'orientation de regard peut également comprendre au moins un système de géolocalisation similaire à celui décrit dans le cadre du premier mode de réalisation afin de déterminer la position exacte des interlocuteurs dans l'environnement de la personne malentendante, pour déterminer si un second interlocuteur regarde en direction d'un premier interlocuteur en train de parler.

Dans ce second mode de réalisation, afin de déterminer si un second interlocuteur écoute un premier interlocuteur en train de parler, l'équipement informatique est également relié à un équipement de synchronisation 11 identique à celui décrit dans le cadre du premier mode de réalisation, et configuré pour déterminer une potentielle corrélation entre un signal représentatif d'une activité vocale du premier interlocuteur et un signal représentatif d'une orientation du regard du second interlocuteur en direction du premier interlocuteur. Un tel équipement de synchronisation peut être un dispositif autonome doté d'une mémoire, de moyens de traitements et d'une interface de communication pour communiquer avec l'équipement informatique. Alternativement, l'équipement de synchronisation peut être confondu avec l'équipement informatique et le module de traitement 8 de celui-ci peut être employé pour déterminer une telle corrélation.

### Procédé

Plus précisément, les étapes décrites ci-dessous peuvent être mises en oeuvre par l'équipement informatique.

Lors d'une première étape d'acquisition E1, l'équipement informatique réalise l'acquisition d'un signal représentatif d'une activité vocale d'un premier interlocuteur parmi la pluralité d'interlocuteurs à l'aide du système de détection d'activité vocale 7. Ce signal peut lui être transmis par le système de détection d'activité vocale décrit ci-dessus.

Lors d'une deuxième étape d'acquisition E2, l'équipement informatique réalise l'acquisition d'un signal caractérisant un comportement d'un deuxième interlocuteur parmi la pluralité d'interlocuteurs en réaction à ladite activité vocale dudit premier interlocuteur.

Lors d'une étape de détermination de groupe E3, l'équipement informatique détermine l'appartenance du premier et du deuxième interlocuteur à un même groupe de conversation, dit premier groupe de conversation, en fonction des signaux acquis pour le premier interlocuteur et le deuxième interlocuteur. Pour ce faire, l'équipement informatique peut déterminer que de tels signaux sont corrélés.

### Premier et deuxième modes de réalisation

Dans les premier et deuxième modes de mise en œuvre reposant respectivement sur l'analyse de l'orientation du visage ou du regard des interlocuteurs, lors de la première étape d'acquisition E1 d'un signal représentatif d'une activité vocale d'un premier interlocuteur, l'équipement informatique peut déterminer une première variable binaire représentative d'une activité vocale dudit interlocuteur. Cette variable binaire peut être déterminée par l'équipement informatique à partir du signal représentatif d'une activité vocale transmise par le système de détection d'activité vocale 7 ou être transmise par le système de détection d'activité vocale 7 directement. Une telle variable peut ainsi prendre la valeur 1 quand le premier interlocuteur parle, et 0 lorsqu'il ne parle pas.

Dans les premier et deuxième modes de mise en oeuvre, lors de la deuxième étape d'acquisition E2 d'un signal caractérisant un comportement d'un deuxième interlocuteur, l'équipement informatique peut déterminer une deuxième variable binaire représentative respectivement d'une détection d'une orientation du visage/regard du deuxième interlocuteur en direction du premier interlocuteur à l'aide du système de détection d'orientation de visage/regard. Une telle détection peut être mise en oeuvre en vérifiant si un vecteur ayant pour origine la position du second interlocuteur et pour direction l'orientation du visage/regard de celui-ci est compris dans un cône de révolution ayant pour axe une droite reliant les centres de visages du premier et du second interlocuteur, et ayant un rayon prédéterminé dans le plan du premier interlocuteur. Un tel rayon est représentatif d'une marge tolérable quant à l'orientation d'un visage/regard pour considérer qu'il est bien dirigé vers le premier interlocuteur, même si ce n'est pas exactement vers le centre du visage de celui-ci.

Dans les premier et deuxième modes de mise en oeuvre, lors de l'étape de détermination de groupe E3 l'équipement informatique détermine une corrélation à l'aide dudit équipement de synchronisation entre lesdites première et deuxième variables. L'équipement de synchronisation peut calculer une fonction d'inter-corrélation entre la première et la deuxième variable ou un coefficient de corrélation de Pearson relatif à ces deux variables binaires, et comparer le résultat d'un tel calcul à un seuil prédéterminé. Un tel seuil représente le niveau de corrélation minimum attendu pour considérer que les mouvements du visage/regard du second interlocuteur sont corrélés aux prises de paroles du premier interlocuteur. Si ce seuil est dépassé, les premier et deuxième interlocuteurs sont alors considérés comme participants à une conversation commune et doivent alors faire partie du même groupe de conversation.

Les premier et deuxième modes de réalisation peuvent être utilisés conjointement afin de déterminer l'appartenance de deux interlocuteurs à un même groupe à la fois à partir de l'orientation du visage et du regard du deuxième interlocuteur.

Optionnellement il est également possible de vérifier l'orientation du visage/regard du premier interlocuteur et de considérer que les premier et deuxième interlocuteurs ne doivent faire partie du même groupe de conversation que si le visage/regard du premier interlocuteur est dirigé vers le deuxième interlocuteur.

### Troisième mode de réalisation

Dans un troisième mode de réalisation, l'appartenance de deux interlocuteurs à un même groupe de conversation peut être réalisée en analysant la succession des prises de paroles entre ces interlocuteurs. Dans le cadre d'une conversation, des interlocuteurs obéissent en effet généralement à un code de conduite selon lequel les interlocuteurs ne se coupent pas la parole mais prennent la parole assez rapidement lorsqu'un interlocuteur arrête de parler. Il est donc possible de déterminer qu'un second interlocuteur répond à un premier interlocuteur lorsque le second interlocuteur prend la parole dans un délai non-nul mais inférieur à un seuil prédéfini après que le premier interlocuteur a fini de parler.

Lors de la deuxième étape d'acquisition E2 d'un signal caractérisant un comportement d'un deuxième interlocuteur, l'équipement informatique peut alors déterminer à l'aide dudit système de détection d'activité vocale une activité vocale du deuxième interlocuteur. Les deux étapes d'acquisition E1 et E2 sont alors mises en oeuvre de manière similaire, respectivement pour le premier et le second interlocuteur, et de manière similaire à la mise en oeuvre de la première étape d'acquisition dans le cadre du premier ou du second mode de réalisation.

Lors de l'étape de détermination de groupe E3, l'appartenance du premier et du deuxième interlocuteur à un même groupe de conversation est alors déterminée en fonction d'un délai entre une fin d'activité vocale du premier interlocuteur et un début d'activité vocale du deuxième interlocuteur.

Il est possible qu'un interlocuteur n'étant pas en conversation avec le premier interlocuteur prenne la parole dans le cadre d'une seconde conversation juste après que le premier interlocuteur ait fini de parler dans le cadre d'une première conversation. Afin d'éviter que ces deux interlocuteurs ne soient alors à tort considérés comme faisant partie du même groupe de conversation, il est possible d'analyser les prises de paroles des interlocuteurs pendant une durée relativement étendue suffisante pour couvrir plusieurs échanges au sein d'une même conversation, et de ne considérer comme faisant partie d'un même groupe de conversation que les interlocuteurs s'étant passés la parole le plus fréquemment, ou un nombre de fois supérieur à un seuil prédéterminé.

### Quatrième mode de réalisation

Dans un quatrième mode de réalisation, l'appartenance de deux interlocuteurs à un même groupe de conversation peut être réalisée en analysant le champ lexical de chaque interlocuteur. Si deux interlocuteurs appartiennent au même groupe de conversation leurs propos respectifs auront en effet le même champ lexical. Ils pourront alors notamment employer les mêmes mots discriminants. On entendra par « mot discriminant » un mot appartenant à un vocabulaire spécifique, c'est-à-dire ne faisant pas partie d'un vocabulaire très courant ou commun à des locuteurs appartenant à des groupes de conversation différents. Une phase d'étalonnage peut être mise en oeuvre afin de déterminer un tel vocabulaire non discriminant qui pourra être exclu lors de la détermination des champs lexicaux des interlocuteurs.

Dans ce mode de réalisation, l'étape d'acquisition E1 d'un signal représentatif d'une activité vocale d'un premier interlocuteur et l'étape d'acquisition E2 d'un signal caractérisant un comportement d'un deuxième interlocuteur peuvent comprendre alors une détermination à l'aide d'un système de reconnaissance vocale de mots discriminants employés par l'interlocuteur ; et l'étape de détermination E3 d'une appartenance du premier et du deuxième interlocuteur à un même groupe de conversation peut comprendre une détermination de l'utilisation des mots discriminants identiques ou similaires par ces interlocuteurs.

Ce quatrième mode de réalisation peut être utilisé conjointement avec les autres modes de réalisation détaillés ci-dessus afin de déterminer l'appartenance de deux interlocuteurs à un même groupe.

Ce quatrième mode de réalisation est particulièrement intéressant car ne nécessite pas de caméra comme les systèmes de détection d'orientation de visage et/ou de regard des premier et deuxième modes de réalisation qui sont de ce fait sensibles aux conditions environnementales telles que la luminosité ambiante. Ce mode permet également de compenser les défaillances visuelles de certains interlocuteurs puisque ne nécessite pas de détection d'orientation de visage et/ou de regard.

A la fin de l'étape de détermination E3, s'il est déterminé que les premier et deuxième interlocuteurs doivent faire partie du même groupe de conversation :
- si aucun des deux interlocuteurs ne fait partie d'un groupe de conversation, un tel groupe est créé et les deux interlocuteurs y sont ajoutés,
- si un des deux interlocuteurs ne fait partie d'aucun groupe de conversation, il peut être ajouté au groupe de conversation de l'autre interlocuteur.
- si les premier et second interlocuteurs font chacun partie d'un groupe de discussion différent, ces groupes peuvent être fusionnés.

A l'inverse s'il est déterminé que le deuxième interlocuteur ne participe plus à une conversation avec le premier interlocuteur, par exemple s'il n'est plus tourné vers ou ne regarde plus le premier interlocuteur, ou encore s'il ne lui a pas répondu depuis pendant une certaine durée, le second interlocuteur peut être retiré du groupe de discussion qu'il partageait avec le premier interlocuteur.

Les étapes décrites ci-dessus peuvent être mises en oeuvre de manière répétée et appliquées à l'ensemble des interlocuteurs dans l'environnement de la personne malentendante, de façon à mettre régulièrement à jour les groupes de conversation déterminés.

Il existe un cas particulier dans lequel un locuteur fait partie de deux groupes de discussions distincts ou plus et prend la parole alternativement dans plusieurs conversations distinctes. Une telle situation peut par exemple se présenter lorsqu'un adulte discutant avec d'autres adultes doit intervenir à intervalle régulier auprès de ses enfants situés à proximité mais ne participant pas à la conversation. La personne malentendante peut alors n'être intéressée que par les propos tenus par ce locuteur dans une seule conversation, la conversation entre adultes dans l'exemple donné ci-dessus, et ne pas vouloir prendre connaissance des propos de ce locuteur dans le cadre de l'autre conversation, par exemple les propos adressés aux enfants.

Lorsqu'un tel interlocuteur prend la parole, le procédé peut comprendre une vérification de l'orientation du visage ou du regard du locuteur afin de déterminer à quel groupe ce locuteur s'adresse. Le locuteur est alors considéré temporairement comme n'appartenant qu'au groupe de discussion auquel il s'adresse, de façon à ce que ses propos ne soient pas rapportés à l'autre groupe. Ainsi dans l'exemple donné ci-dessus, lorsque l'adulte s'adresse à ses enfants en les regardant, il est considéré comme n'appartenant qu'au groupe de discussion formé avec ses enfants. Ainsi ses propos aux enfants ne seront pas communiqués à une personne malentendante faisant partie du groupe de conversation des adultes.

Afin d'associer un interlocuteur à un groupe de conversation, c'est-à-dire à une conversation en particulier, l'identité de cet interlocuteur doit être mémorisée. Si chaque interlocuteur dispose d'un microphone, il peut être identifié par un identifiant de l'équipement réalisant l'acquisition de ses propos. Un tel identifiant peut être arbitraire ou bien correspondre à un paramètre tel qu'une adresse IP. Alternativement, l'équipement informatique 3 peut être relié à une base de données de signatures vocales d'interlocuteurs et l'équipement informatique de la personne malentendante 3 peut comprendre un module de reconnaissance vocale. L'interlocuteur peut être identifié par la mémorisation d'une empreinte vocale. Ainsi, lorsqu'un interlocuteur dont une empreinte vocale a été mémorisée reprend la parole, sa voix peut être identifiée et les propos captés peuvent être rattachés à cet interlocuteur. Une telle base de données de signatures vocales peut également associer à chaque signature vocale une donnée d'identité de l'interlocuteur correspondant telle que son nom. Alternativement, l'équipement informatique peut être relié à une caméra et une base de données de reconnaissance faciale. Chaque interlocuteur peut alors être identifié visuellement par comparaison d'une image du visage de l'interlocuteur prise par la caméra avec des images de référence enregistrées dans la base de données de reconnaissance faciale.

A l'issue de l'étape de détermination E3, les interlocuteurs identifiés ayant pris la parole durant une durée écoulée prédéterminée peuvent être affichés sur le dispositif d'affichage sous forme de liste ou d'image avec une indication du ou des groupes de conversation auxquels chaque interlocuteur appartient.

La personne malentendante souhaitant suivre une conversation avec un premier groupe de conversation, peut ensuite lors d'une étape de sélection de groupe E4 sélectionner ce premier groupe de conversation parmi les groupes de conversation ainsi déterminés.

La personne malentendante détermine ensuite si elle souhaite que l'ensemble des différentes interventions de chacun des interlocuteurs de ce premier groupe de conversations lui soient restituées sous forme de texte ou de voix. Pour ce faire elle détermine un mode de restitution vocal ou textuel pour ledit premier groupe de conversation sélectionné lors d'une étape de détermination de mode de restitution E5.

Dans une variante de mise en oeuvre, l'équipement informatique 3 de la personne malentendante étant relié à un dispositif de détection de mouvements 13 de la personne malentendante 2, les étapes de sélection d'un groupe de conversation et/ou de détermination d'un mode de restitution sont mises en oeuvre en fonction d'un mouvement de la personne malentendante détecté par le dispositif de détection de mouvements.

Dans cette variante de mise en oeuvre, l'équipement informatique peut être relié à un dispositif de reconnaissance gestuel configuré pour reconnaitre certains gestes de la personne malentendante et à une base de données stockant en correspondance à chacun de ces gestes, en fonction éventuellement de l'interlocuteur, la sélection ou non d'un groupe de conversation ou le mode de restitution associé.

Selon une autre variante de mise en oeuvre, l'équipement informatique de la personne malentendante 3 peut comprendre un module de reconnaissance vocale 14. Une étape de réception d'une commande vocale de la personne malentendante 2 relative à un groupe ou un mode de restitution à sélectionner en fonction de ladite commande vocale peuvent alors être réalisée, le module de reconnaissance vocale 14 étant alors configuré pour analyser ladite commande vocale. La personne malentendante peut ainsi interagir vocalement avec l'équipement informatique 3 pour commander la sélection d'un groupe ou d'un mode de restitution particulier. La reconnaissance par l'équipement informatique 3 d'une commande vocale émise par la personne malentendante peut n'être effective que si la personne malentendante a au préalable effectué une action particulière, comme faire un mouvement particulier ou appuyer sur un bouton d'interface, ou tant que la personne malentendante effectue une telle action.

Alternativement, la personne malentendante peut interagir avec l'équipement informatique 3 par la pensée. L'équipement informatique peut par exemple être relié à un casque neuronal posé sur le crâne de la personne malentendante et configuré pour réaliser un électroencéphalogramme de celle-ci. L'utilisateur peut ainsi soumettre à l'équipement informatique des commandes par la pensée, par exemple des commandes simples telles que la sélection d'un groupe particulier. La personne malentendante peut ainsi interagir avec son équipement informatique sans utiliser ses mains et sans déranger les personnes de son entourage comme pourrait le faire une commande vocale.

Puis, lorsque le mode de restitution vocal a été déterminé pour le premier groupe de conversation : lors d'une étape de transmission de signaux voix E6, l'équipement informatique transmet des signaux voix acquis pour les interlocuteurs appartenant à ce premier groupe de conversation au module d'émission de voix 4, pour que ce dernier émette ces signaux voix. La personne malentendante sélectionne ainsi les conversations qu'elle veut entendre sous forme vocale.

Les modules d'émission de voix sont des haut-parleurs directifs. De tels hauts parleurs peuvent par exemple être disposés dans le local dans lequel se tient la personne malentendante ainsi que ses interlocuteurs de manière à former un maillage permettant d'émettre un son de manière directive à une personne où qu'elle soit située dans l'ensemble du local. Ce réseau de haut-parleurs peut par exemple être fixé au plafond du local. La position de chaque haut-parleur étant connue et la personne malentendante pouvant être localisée comme vu précédemment, l'équipement informatique peut lorsque le mode de restitution vocal a été déterminé, transmettre les signaux voix acquis au haut-parleur le plus approprié pour émission des signaux voix vers la personne malentendante. Une telle mise en oeuvre permet ainsi à la personne malentendante de ne pas avoir à se munir de casque ou d'écouteurs. Cette mise en œuvre peut aussi être utilisée par des personnes bien-entendantes afin de personnaliser leur environnement sonore de manière à leur apporter un meilleur confort auditif.

Les haut-parleurs directifs peuvent utiliser la technologie des ultrasons pour produire un faisceau conique dirigeant le faisceau de signaux voix vers une unique personne. Un faisceau conique présente par exemple un diamètre de 25 à 60 cm pour une hauteur de 1m50. Le maillage composé d'une pluralité de cellules, peut comprendre dans chaque cellule au moins un haut-parleur directif. La cellule est par exemple d'une dimension de 80x80 cm, les dimensions étant adaptées suivant les applications, les locaux...Une cellule est associée à une zone d'émission des signaux voix. Une telle zone peut comprendre une dimension de 40 à 80 cm de diamètre, ou de 10 à 40 cm dans des espaces plus réduits.

Le maillage peut également comprendre des cellules de tailles différentes. Ainsi, dans le cas de cellules ne se recouvrant pas, le maillage peut comprendre entre deux cellules voisines, une zone de vide, où aucun signal ne peut être transmis. Dans un tel cas, on peut donc disposer une cellule intermédiaire de taille plus réduite, permettant de réduire très fortement les zones blanches de transmission, et ainsi d'assurer un confort d'écoute à une personne suivie. La taille des haut-parleurs peut être également variable suivant la taille des cellules.

Une cellule peut comprendre également une pluralité de micros géolocalisables pour capturer les signaux voix, et au moins une caméra configurée pour suivre le déplacement d'une personne au sein de la cellule, permettant au module d'émission de voix 4, le suivi d'une personne, telle qu'une personne malentendante. Ainsi, les haut-parleurs peuvent être adaptés pour diriger le faisceau de signaux voix vers une personne de déplaçant au sein de la cellule, par exemple par redirection des ondes émises ou par un dispositif mobile, les haut-parleurs pouvant être fixés sur des tourelles motorisées.

Le module d'émission de voix 4 permet aussi le suivi d'une personne se déplaçant au sein de différentes cellules. Ainsi, dans le cas où une personne suivie sort de la cellule où des signaux voix lui sont transmis, le module détermine une direction de déplacement de ladite personne et détermine la future cellule dans laquelle la personne suivie se trouvera. Si la cellule future est libre, c'est-à-dire si aucune autre personne n'est suivie dans cette deuxième cellule, les signaux voix sont transmis à la personne suivie quand l'utilisateur s'y trouve. Ce dernier bénéficie donc d'un suivi fluide de la conversion lors de ces déplacements, tout en restreignant la portée des signaux voix émis. Les perturbations sonores sur le voisinage de la personne suivie sont donc très modérées.

Dans un mode de réalisation, le basculement des signaux voix d'une cellule à une autre est uniquement mis en oeuvre quand aucun locuteur du groupe de conversation de la personne suivie ne parle.

Dans un autre mode de réalisation, le module d'émission de voix 4 peut être configuré avec des règles de priorité pour certaines personnes suivies. Ainsi, pour une personne dite prioritaire, le module peut également transmettre les signaux de voix sur les cellules libres autour de ladite personne. Par exemple, les signaux peuvent être transmis sur la cellule d'une personne prioritaire et sur les cellules libres directement voisines de celle-ci. Dans un autre exemple, les signaux sont émis sur toutes les cellules libres entre la cellule d'une personne prioritaire et une cellule non libre. Ces règles de priorité permettent, par exemple, de favoriser le suivi de la conversion pour une personne malentendante dans le cas où les cellules sont de dimensions restreintes. Ainsi, dans cette configuration, adaptée pour des situations où les personnes ne sont pas destinées à être mobiles (ex; salle de réunion, restaurant ...), le module d'émission 4 permet malgré tout une liberté de mouvement.

Dans un mode de réalisation, une personne suivie peut être localisée sur différentes cellules et le module d'émission 4 peut envoyer les mêmes signaux à l'utilisateur sur au moins deux cellules en introduisant un décalage entre les signaux, par exemple avec des lignes de retard. Le décalage est calculé de façon à retranscrire pour l'utilisateur une perception du son en stéréo, permettant ainsi une meilleure localisation de l'origine des signaux transmis.

Lorsque le système d'aide au suivi d'une conversation comprend une pluralité de micros géolocalisables, pouvant comporter une centrale inertielle et pouvant être des objets connectés dans un réseau sans fil. La pluralité de micros permet de capturer les signaux voix, une variante peut être mise en œuvre pour limiter les problèmes liés aux pannes de ces micros et capturer les signaux voix à l'aide du micro le plus performant. Cette variante nécessite une phase d'étalonnage préalable permettant de déterminer les performances de chaque micro de la pluralité de micros en fonction de leur distance et de leur orientation vis à vis du locuteur. Ces performances peuvent être déterminées en faisant émettre des mots par un haut-parleur situé à différentes positions par rapport au micro, en appliquant un algorithme de reconnaissance de mot aux signaux voix capturés par le micro, puis en calculant un ratio de mots reconnus parmi les mots émis pour chacune de ces positions. Puis, en phase de fonctionnement, en fonction de l'orientation du visage et/ou de la localisation de l'interlocuteur, et de la position et de l'orientation des micros, le micro le plus performant est sélectionné pour capturer les paroles de cet interlocuteur. La sélection d'un micro peut également tenir compte d'un état de ce micro, par exemple un niveau de batterie.

En revanche, lorsque le mode de restitution textuel a été déterminé pour le premier groupe de conversation : les signaux voix acquis pour les interlocuteurs appartenant au premier groupe de conversation sont convertis en signaux texte par le module de conversion de signaux 6 et transmis à l'équipement informatique qui commande ensuite leur affichage sur le dispositif d'affichage 5 lors d'une étape de commande d'affichage E7. La personne malentendante sélectionne ainsi les conversations dont elle veut obtenir une transcription sous forme textuelle, afin de pouvoir les suivre en arrière-plan sans gêner sa compréhension de la conversation suivie sous forme orale.

Lorsque chaque interlocuteur dispose de son propre microphone, chaque interlocuteur peut également disposer d'un module de conversion de signaux voix en signaux texte. Le procédé peut mettre en oeuvre une étape de capture de signaux voix de chaque interlocuteur à l'aide de son microphone, une étape de conversion des signaux voix capturés en signaux texte par son module de conversion, et une étape de transmission à l'équipement informatique de la personne malentendante des signaux voix capturés ou des signaux texte obtenus en fonction du mode de restitution sélectionné.

Lorsque la quantité de signaux textes à afficher sur le dispositif d'affichage est importante, l'équipement informatique peut remplacer tout ou partie du texte à afficher par un résumé de celui-ci. Le texte peut être résumé par des phrases simples ou bien même par des mots isolés exprimant des concepts. Une telle modification du texte peut être déclenchée de manière manuelle par l'utilisateur de l'équipement informatique, pour un ou plusieurs de ses interlocuteurs, ou bien de manière automatique lorsque la quantité de texte à afficher dépasse un seuil prédéterminé. L'affichage d'un texte résumé peut permettre de diminuer la fatigue de la personne malentendante lors de conversations rapides ou avec de nombreux interlocuteurs au cours desquelles il peut être difficile de lire l'intégralité des propos sur une longue durée.

Dans un mode de réalisation la personne malentendante peut sélectionner plusieurs groupes de conversation en même temps. Elle peut sélectionner pour chacun de ces groupes, indépendamment des autres, le mode de restitution vocal ou le mode de restitution textuel et ainsi suivre en parallèle plusieurs conversations, certaines sous forme vocale, d'autres sous forme textuelle. Bien que le procédé ait pour objectif une sélection automatique des interlocuteurs par le biais des groupes de conversation, la personne malentendante peut affiner manuellement cette sélection ajoutant manuellement un interlocuteur à un groupe de conversation, ou bien en l'en retirant, ou encore en demandant une restitution des propos d'un ou plusieurs interlocuteurs en fonction de leurs groupes de conversation.

Dans certaines situations, la personne malentendante peut être impliquée dans une conversation avec plusieurs interlocuteurs ne pouvant pas tous se trouver simultanément dans son champ de vision. C'est par exemple le cas si la personne malentendante est en conversation à table avec des interlocuteurs situés à sa droite et à sa gauche. Les personnes malentendantes compensant souvent leurs problèmes d'audition par des informations visuelles, telles que les expressions faciales, il est primordial pour une personne malentendante de pouvoir voir ses interlocuteurs et de pouvoir noter leurs émotions. L'équipement informatique 3 peut être relié à au moins une caméra capturant une image d'un ou plusieurs interlocuteurs de la personne malentendante. Suite à la sélection d'un groupe de conversation, l'équipement informatique 3 peut afficher une image des interlocuteurs appartenant à ce groupe de conversation filmés par au moins une caméra et situés hors du champ de vision de la personne malentendante dans une vignette insérée dans l'image affichée sur ledit dispositif d'affichage 5. La personne malentendante peut ainsi percevoir les informations visuelles émanant de ces interlocuteurs bien qu'ils ne se trouvent pas dans son champ de vision. Afin de n'afficher que l'image du visage de ces interlocuteurs, l'équipement informatique 3 peut comprendre un système de reconnaissance d'image ou de traitement d'image isolant le visage des interlocuteurs dans les images capturées par l'au moins une caméra. Un tel affichage peut être mis à jour de manière dynamique afin de détecter les interlocuteurs intégrant ou quittant le champ de vision de la personne malentendante en fonction des mouvements de ceux-ci et de celle-ci. Les images des interlocuteurs affichées sur le dispositif d'affichage 5 peuvent être mises à jour en fonction de cette détection pour que la personne malentendante puisse en permanence visualiser une image de l'ensemble de ces interlocuteurs.

Dans une variante de mise en oeuvre, l'équipement informatique de la personne malentendante étant relié à une base de données comprenant de multiples expressions de chacun des interlocuteurs et à un dispositif de détection de changement d'expression de visage, le procédé peut n'afficher que le visage des interlocuteurs de la personne malentendante hors de son champ de vision et changeant d'expression de visage. La détection d'un tel changement d'expression peut s'accompagner de l'émission d'une alarme, par exemple sonore, afin d'attirer l'attention de la personne malentendante sur cet événement. La personne malentendante peut également être prévenue d'une telle détection par une vibration. Une telle vibration peut être émise par un vibreur connecté parmi une pluralité de tels vibreurs placés au contact de la peau de la personne malentendante, par exemple intégrés à ses vêtements. L'équipement informatique peut choisir le vibreur à faire vibrer de façon à déclencher la vibration du vibreur positionné sur le corps de la personne malentendante dans la direction de l'interlocuteur ayant changé d'expression. Par exemple si cet interlocuteur est positionné sur la gauche de la personne malentendante, l'équipement informatique peut faire vibrer un vibreur positionné sur le bras gauche ou le flanc gauche de la personne malentendante. Celle-ci est ainsi prévenue de la direction dans laquelle se tourner pour voir la personne ayant changé d'expression.

Dans un autre mode de réalisation, le dispositif de vibration peut être également utilisé pour indiquer à la personne malentendante la direction d'un interlocuteur qui est en train de parler. Les vibreurs sont par exemple connectés à l'équipement de synchronisation 11. Les vibreurs peuvent être également géolocalisés et comprendre une centrale inertielle.

Les vibreurs peuvent être localisés par rapport à une centrale inertielle locale, servant à définir un référentiel local, spécifique au porteur de capteur, en référence à une partie du corps dudit porteur. Idéalement, cette partie est localisée à la base du cou de celui-ci. Cette centrale locale peut servir à l'étalonnage des centrales inertielles des capteurs.

Ce référentiel local est également défini par rapport à un référentiel global. Par exemple dans le cas de personnes se trouvant dans un local, le référentiel global sera un référentiel du local.

Dans un autre mode de réalisation, les capteurs comportent des émetteurs ultrasons et émettent une séquence prédéterminée les identifiant. Des capteurs ultrasons disposés sur des objets spécifiques, de préférence fixe, dont on connait la disposition dans un référentiel global, par exemple une chaise, permettent par triangulation de connaitre la position des capteurs dans le référentiel global.

Ainsi, par la connaissance précise de la localisation des capteurs, l'équipement de synchronisation peut donc choisir les vibreurs à activer en référence à d'autres personnes présentes dans la salle, par exemple par rapport à une personne prenant la parole et identifiée par un système de reconnaissance d'image ou de traitement d'image de l'équipement informatique 3.

Le procédé peut, par ailleurs, comporter une étape initiale d'étalonnage au cours de laquelle des interlocuteurs peuvent être enregistrés dans le système. Un tel enregistrement peut consister en la mémorisation d'un identifiant de l'interlocuteur, éventuellement son nom, accompagné d'une empreinte vocale et/ou d'une empreinte de visage telle qu'une image 3D ou une photographie. Un tel enregistrement peut également comprendre une série de photographies du visage de l'interlocuteur lorsque celui-ci forme divers angles par rapport à une direction de référence. Une telle empreinte de visage peut ensuite être employée par le système de détection d'orientation de visage pour déterminer l'orientation du visage de l'interlocuteur par rapport à une direction.

L'équipement informatique de la personne malentendante 3 peut être relié à une base de données de conversation stockant des données relatives à des conversations passées suivies par la personne malentendante de manière vocale ou textuelle. Une telle base de données peut par exemple mémoriser pour ces conversations l'identité des interlocuteurs identifiés, les choix de sélection réalisés par la personne malentendante, des données de localisation de la conversation... A partir de ces données, dans une situation donnée où la personne malentendante est environnée de divers interlocuteurs, l'équipement informatique 3 peut présélectionner automatiquement un groupe de conversation comprenant les interlocuteurs les plus souvent sélectionnés dans le passé par la personne malentendante. L'équipement informatique 3 peut également déclencher automatiquement la restitution vocale, respectivement l'affichage en mode texte, des paroles des interlocuteurs présents dont le groupe a le plus souvent été sélectionné dans le passé par la personne malentendante pour une restitution vocale, respectivement textuelle. Ceci permet de proposer automatiquement à la personne malentendante les conversations les plus intéressantes pour elle. La sélection d'au moins un premier groupe pour une restitution vocale et/ou d'un second groupe pour une restitution textuelle est ainsi réalisée en fonction de préférences et/ou usages de la personne malentendante. La mise à jour à l'issue de chaque conversation de la base de données de conversation permet à l'équipement informatique 3 de réagir de manière personnalisée par un apprentissage basé sur une analyse du comportement de la personne malentendante.

L'équipement informatique 3 peut être doté d'une fonction d'enregistrement des conversations et peut proposer à la personne malentendante une visualisation de l'historique des conversations enregistrées. La personne malentendante peut interagir avec l'équipement informatique 3 pour parcourir ces données d'historique à l'aide de boutons d'interface ou par le biais d'un écran tactile. Dans le cas d'un affichage 3D ou en réalité augmentée, les signaux voix et texte acquis peuvent être échelonnés dans l'axe de la profondeur de l'affichage en fonction de leur date d'acquisition. Dans le cas d'un nombre important d'interlocuteurs, un tel affichage, combinant un affichage selon la profondeur pour afficher l'historique des propos et un affichage à différents angles d'affichage pour différencier les interlocuteurs, assure une meilleure visibilité des conversations reproduites.

La personne malentendante peut ainsi suivre efficacement au moins une conversation en cours même lorsque les interlocuteurs participant à ces conversations changent régulièrement et/ou participent à d'autres conversations, sans avoir à fournir une attention ou un effort important.

## Revendications

1. Procédé d'aide au suivi d'une conversation avec une pluralité d'interlocuteurs (1), chacun susceptible d'appartenir à au moins un groupe de conversation, pour une personne malentendante (2) munie d'un équipement informatique (3),
ledit équipement informatique étant relié à au moins un module d'émission de voix (4) constitué par des haut-parleurs directifs, au moins un dispositif d'affichage (5), à au moins un module de conversion (6) de signaux voix en signaux texte, à au moins un système de détection d'activité vocale (7) et à au moins un dispositif de localisation,
ledit procédé comprenant les étapes suivantes mises en oeuvre par ledit équipement informatique:
- acquisition (E1) d'un signal représentatif d'une activité vocale d'un premier interlocuteur parmi la pluralité d'interlocuteurs, à l'aide dudit système de détection d'activité vocale (7),
- acquisition (E2) d'un signal caractérisant un comportement d'un deuxième interlocuteur parmi la pluralité d'interlocuteurs en réaction à ladite activité vocale dudit premier interlocuteur,
- détermination (E3) d'une appartenance du premier et du deuxième interlocuteur à un même groupe de conversation, dit premier groupe de conversation, en fonction des signaux acquis pour le premier interlocuteur et le deuxième interlocuteur,
- sélection (E4) du premier groupe de conversation parmi lesdits groupes de conversation,
**caractérisé en ce que** l'équipement informatique met en œuvre les étapes suivantes :
- détermination (E5) d'un mode de restitution vocal pour ledit premier groupe de conversation sélectionné,
- lorsque le mode de restitution vocal a été déterminé pour le premier groupe de conversation : transmission (E6), au module d'émission de voix (4) de signaux voix acquis pour les interlocuteurs appartenant au premier groupe de conversation sélectionné, pour émission desdits signaux voix, l'étape de transmission comprenant en outre la :
- localisation de la personne malentendante par le système de localisation,
- détermination par le module d'émission (4) d'au moins une zone d'émission des signaux voix à proximité de la localisation de la personne malentendante, parmi une pluralité de zones d' émission, une zone d'émission étant associée à au moins un haut-parleur,
- allocation d'au moins une zone d'émission, parmi les zones déterminées, à la personne malentendante (2) par le module d'émission (4), et
- émission des signaux voix dans ladite zone.

2. Procédé selon l'une des revendications précédentes, dans lequel une zone d'émission est allouée à ladite personne malentendante (2), si celle-ci n'est pas préalablement allouée à une seconde personne.

3. Procédé selon la revendication précédente, dans lequel l'étape d'allocation par le module d'émission (4) d'au moins une zone d'émission, comprend l'allocation à ladite personne malentendante (2) des zones d'émission positionnées entre une première zone allouée à ladite personne malentendante (2) et une seconde zone allouée à une seconde personne.

4. Procédé d'aide au suivi d'une conversation selon l'une des revendications précédentes, dans lequel ledit équipement informatique met en oeuvre les étapes suivantes :
- détermination (E5) d'un mode de restitution textuel pour ledit premier groupe de conversation sélectionné,
- lorsque le mode de restitution textuel a été déterminé pour le premier groupe de conversation : commande de l'affichage (E7), sur le dispositif d'affichage, de signaux texte obtenus par conversion de signaux voix acquis pour les interlocuteurs appartenant au premier groupe de conversation sélectionné, à l'aide du module de conversion (6) de signaux.

5. Procédé d'aide au suivi d'une conversation selon l'une des revendications précédentes,
ledit équipement informatique étant relié en outre à au moins un système de détection d'orientation de visage (10), et à un équipement de synchronisation (11) configuré pour déterminer une corrélation entre des signaux relatifs à différents interlocuteurs,
dans lequel :
- l'étape d'acquisition (E1) d'un signal représentatif d'une activité vocale d'un premier interlocuteur comprend une détermination d'une première variable binaire représentative d'une activité vocale dudit premier interlocuteur,
- l'étape d'acquisition (E2) d'un signal caractérisant un comportement d'un deuxième interlocuteur comprend une détermination d'une deuxième variable binaire représentative d'une détection d'une orientation du visage du deuxième interlocuteur en direction du premier interlocuteur à l'aide du système de détection d'orientation de visage,
- l'étape de détermination (E3) d'une appartenance du premier et du deuxième interlocuteur à un même groupe de conversation comprend une détermination d'une corrélation à l'aide dudit équipement de synchronisation entre lesdites première et deuxième variables.

6. Procédé d'aide au suivi d'une conversation selon l'une des revendications précédentes,
ledit équipement informatique étant relié en outre, à au moins un système de détection d'orientation de regard (12), et à un équipement de synchronisation (11) configuré pour déterminer une corrélation entre des signaux relatifs à différents interlocuteurs,
dans lequel :
- l'étape d'acquisition (E1) d'un signal représentatif d'une activité vocale d'un premier interlocuteur comprend une détermination d'une première variable binaire représentative d'une activité vocale dudit premier interlocuteur,
- l'étape d'acquisition (E2) d'un signal caractérisant un comportement d'un deuxième interlocuteur comprend une détermination d'une troisième variable binaire représentative d'une détection d'une orientation du regard du deuxième interlocuteur en direction du premier interlocuteur à l'aide du système de détection d'orientation de regard,
- l'étape de détermination (E3) d'une appartenance du premier et du deuxième interlocuteur à un même groupe de conversation comprend une détermination d'une corrélation à l'aide dudit équipement de synchronisation entre lesdites première et troisième variables.

7. Procédé d'aide au suivi d'une conversation selon l'une des revendications précédentes, dans lequel :
- l'étape d'acquisition (E2) d'un signal caractérisant un comportement d'un deuxième interlocuteur comprend une détermination à l'aide dudit système de détection d'activité vocale d'une activité vocale du deuxième interlocuteur,
- l'appartenance (E3) du premier et du deuxième interlocuteur à un même groupe de conversation est déterminée en fonction d'un délai entre une fin d'activité vocale du premier interlocuteur et un début d'activité vocale du deuxième interlocuteur.

8. Produit programme d'ordinateur comprenant des instructions de code pour l'exécution d'un procédé selon l'une quelconque des revendications précédentes lorsque ce programme est exécuté par l'équipement informatique de la revendication 9.

9. Equipement informatique (3), pour l'aide au suivi d'une conversation avec une pluralité d'interlocuteurs (1), pour une personne malentendante (2) configuré pour être relié à au moins un module d'émission de voix (4), à au moins un dispositif d'affichage (5) et à au moins un module de conversion de signaux voix en signaux texte (6) et à au moins un système de détection d'activité vocale (7),
ledit équipement informatique (3) étant en outre configuré pour mettre en oeuvre les étapes du procédé selon l'une quelconque des revendications 1 à 8.

10. Système (14) d'aide au suivi d'une conversation avec une pluralité d'interlocuteurs pour une personne malentendante (2) comprenant :
un équipement informatique (3) selon la revendication précédente,
et un système de détection d'orientation de visage (10) et/ou de regard (12) comprenant au moins une caméra stéréoscopique configurée pour détecter l'orientation du visage et/ou du regard d'un interlocuteur.

11. Système (14) d'aide au suivi d'une conversation avec une pluralité d'interlocuteurs pour une personne malentendante (2) comprenant :
un équipement informatique (3) selon la revendication 9,
et un système de détection d'orientation de visage (10) comprenant au moins un système de géolocalisation et au moins un gyromètre et/ou accéléromètre configurés pour déterminer la localisation d'un interlocuteur et l'orientation de son visage par rapport aux autres interlocuteurs.

## Patentansprüche

1. Verfahren zur Hilfe beim Verfolgen einer Konversation mit einer Vielzahl von Gesprächsteilnehmern (1), wovon jeder mindestens einer Konversationsgruppe angehören kann, für eine hörbehinderte Person (2), die mit einer Informatikeinrichtung (3) ausgestattet ist,
wobei die Informatikeinrichtung mit mindestens einem Sprachausgabemodul (4), das von richtungsgebenden Lautsprechern gebildet wird, mindestens einer Anzeigevorrichtung (5), mit mindestens einem Modul zur Umwandlung (6) von Sprachsignalen in Textsignale, mit mindestens einem System zur Sprachaktivitätserkennung (7) und mit mindestens einer Lokalisierungsvorrichtung verbunden ist,
wobei das Verfahren folgende Schritte umfasst, die von der Informatikeinrichtung umgesetzt werden:
- Erfassen (E1) eines Signals, das bezeichnend ist für eine Sprachaktivität eines ersten Gesprächsteilnehmers mithilfe des Systems zur Sprachaktivitätserkennung (7),
- Erfassen (E2) eines Signals, das ein Verhalten eines zweiten Gesprächsteilnehmers unter der Vielzahl von Gesprächsteilnehmern als Reaktion auf die Sprachaktivität des ersten Gesprächsteilnehmers kennzeichnet,
- Bestimmen (E3) einer Zugehörigkeit des ersten und des zweiten Gesprächsteilnehmers zu einer gleichen Konversationsgruppe, einer so genannten ersten Konversationsgruppe, in Abhängigkeit von den erfassten Signalen für den ersten Gesprächsteilnehmer und den zweiten Gesprächsteilnehmer,
- Auswählen (E4) der ersten Konversationsgruppe unter den Konversationsgruppen,
**dadurch gekennzeichnet, dass** die Informatikeinrichtung folgende Schritte umsetzt:
- Bestimmen (E5) eines Sprachwiedergabemodus für die ausgewählte erste Konversationsgruppe,
- wenn der Sprachwiedergabemodus für die erste Konversationsgruppe bestimmt wurde: Übertragen (E6) von Sprachsignalen, die für die Gesprächsteilnehmer, die zu der ausgewählten ersten Konversationsgruppe gehören, erfasst wurden, an das Sprachausgabemodul (4), für eine Ausgabe der Sprachsignale, wobei der Schritt des Übertragens weiter umfasst:
- Lokalisieren der hörbehinderten Person durch das Lokalisierungssystem,
- Bestimmen, durch das Ausgabemodul (4), von mindestens einem Ausgabebereich der Sprachsignale in der Nähe des Orts der hörbehinderten Person, unter einer Vielzahl von Ausgabebereichen, wobei ein Ausgabebereich mindestens einem Lautsprecher zugeordnet ist,
- Zuweisen von mindestens einem Ausgabebereich unter den bestimmten Bereichen zu der hörbehinderten Person (2) durch das Ausgabemodul (4), und
- Ausgeben der Sprachsignale in dem Bereich.

2. Verfahren nach einem der vorstehenden Ansprüche, wobei ein Ausgabebereich der hörbehinderten Person (2) zugewiesen wird, falls dieser nicht zuvor einer zweiten Person zugewiesen wurde.

3. Verfahren nach dem vorstehenden Anspruch, wobei der Schritt des Zuweisens von mindestens einem Ausgabebereich durch das Ausgabemodul (4) das Zuweisen, zu der hörbehinderten Person (2), von Ausgabebereichen, die zwischen einem ersten Bereich, der der hörbehinderten Person (2) zugewiesen ist, und einem zweiten Bereich positioniert sind, der einer zweiten Person zugewiesen ist, umfasst.

4. Verfahren zur Hilfe beim Verfolgen einer Konversation nach einem der vorstehenden Ansprüche, wobei die Informatikeinrichtung folgende Schritte umsetzt:
- Bestimmen (E5) eines Textwiedergabemodus für die ausgewählte erste Konversationsgruppe,
- wenn der Textwiedergabemodus für die erste Konversationsgruppe bestimmt wurde: Befehlen der Anzeige (E7), auf der Anzeigevorrichtung, von Textsignalen, die durch Umwandlung von Sprachsignalen erhalten wurden, die für die Gesprächsteilnehmer erfasst wurden, die zu der ausgewählten ersten Konversationsgruppe gehören, mithilfe des Moduls zur Umwandlung (6) von Signalen.

5. Verfahren zur Hilfe beim Verfolgen einer Konversation nach einem der vorstehenden Ansprüche,
wobei die Informatikeinrichtung weiter mit mindestens einem System zur Erkennung der Gesichtsausrichtung (10) und mit einer Synchronisationseinrichtung (11) verbunden ist, die ausgestaltet ist, eine Korrelation zwischen Signalen in Bezug auf unterschiedliche Gesprächsteilnehmer zu bestimmen,
wobei:
- der Schritt des Erfassens (E1) eines Signals, das bezeichnend ist für eine Sprachaktivität eines ersten Gesprächsteilnehmers ein Bestimmen einer ersten Binärvariable umfasst, die bezeichnend ist für eine Sprachaktivität des ersten Gesprächsteilnehmers,
- der Schritt des Erfassens (E2) eines Signals, das ein Verhalten eines zweiten Gesprächsteilnehmers kennzeichnet, ein Bestimmen einer zweiten Binärvariable umfasst, die bezeichnend ist für ein Erkennen einer Gesichtsausrichtung des zweiten Gesprächsteilnehmers in Richtung des ersten Gesprächsteilnehmers mithilfe des Systems zur Erkennung der Gesichtsausrichtung,
- der Schritt des Bestimmens (E3) einer Zugehörigkeit des ersten und des zweiten Gesprächsteilnehmers zu einer gleichen Konversationsgruppe ein Bestimmen einer Korrelation mithilfe der Synchronisationseinrichtung zwischen den ersten und zweiten Variablen umfasst.

6. Verfahren zur Hilfe beim Verfolgen einer Konversation nach einem der vorstehenden Ansprüche,
wobei die Informatikeinrichtung weiter mit mindestens einem System zur Erkennung der Blickausrichtung (12) und mit einer Synchronisationseinrichtung (11) verbunden ist, die ausgestaltet ist, eine Korrelation zwischen Signalen in Bezug auf unterschiedliche Gesprächsteilnehmer zu bestimmen,
wobei:
- der Schritt des Erfassens (E1) eines Signals, das bezeichnend ist für eine Sprachaktivität eines ersten Gesprächsteilnehmers ein Bestimmen einer ersten Binärvariable umfasst, die bezeichnend ist für eine Sprachaktivität des ersten Gesprächsteilnehmers,
- der Schritt des Erfassens (E2) eines Signals, das ein Verhalten eines zweiten Gesprächsteilnehmers kennzeichnet, ein Bestimmen einer dritten Binärvariable umfasst, die bezeichnend ist für ein Erkennen einer Blickausrichtung des zweiten Gesprächsteilnehmers in Richtung des ersten Gesprächsteilnehmers mithilfe des Systems zur Erkennung der Blickausrichtung,
- der Schritt des Bestimmens (E3) einer Zugehörigkeit des ersten und des zweiten Gesprächsteilnehmers zu einer gleichen Konversationsgruppe ein Bestimmen einer Korrelation mithilfe der Synchronisationseinrichtung zwischen den ersten und dritten Variablen umfasst.

7. Verfahren zur Hilfe beim Verfolgen einer Konversation nach einem der vorstehenden Ansprüche, wobei:
- der Schritt des Erfassens (E2) eines Signals, das ein Verhalten eines zweiten Gesprächsteilnehmers kennzeichnet, ein Bestimmen einer Sprachaktivität des zweiten Gesprächsteilnehmers mithilfe des Systems zur Erkennung einer Sprachaktivität umfasst,
- die Zugehörigkeit (E3) des ersten und des zweiten Gesprächsteilnehmers zu einer gleichen Konversationsgruppe bestimmt wird in Abhängigkeit einer Zeitspanne zwischen einem Ende einer Sprachaktivität des ersten Gesprächsteilnehmers und einem Beginn einer Sprachaktivität des zweiten Gesprächsteilnehmers.

8. Computerprogrammprodukt, umfassend Codeanweisungen zur Ausführung eines Verfahrens nach einem der vorstehenden Ansprüche, wenn das Programm durch die Informatikeinrichtung nach Anspruch 9 ausgeführt wird.

9. Informatikeinrichtung (3) zur Hilfe beim Verfolgen einer Konversation mit einer Vielzahl von Gesprächsteilnehmern (1) für eine hörbehinderte Person (2), die ausgestaltet ist, mit mindestens einem Sprachausgabemodul (4), mit mindestens einer Anzeigevorrichtung (5) und mit mindestens einem Modul zur Umwandlung von Sprachsignalen in Textsignale (6) und mit mindestens einem System zur Sprachaktivitätserkennung (7) verbunden zu werden,
wobei die Informatikeinrichtung (3) weiter ausgestaltet ist, die Schritte des Verfahrens nach einem der Ansprüche 1 bis 8 umzusetzen.

10. System (14) zur Hilfe beim Verfolgen einer Konversation mit einer Vielzahl von Gesprächsteilnehmern für eine hörbehinderte Person (2), umfassend:
eine Informatikeinrichtung (3) nach dem vorstehenden Anspruch,
und ein System zur Erkennung der Gesichtsausrichtung (10) und/oder der Blickausrichtung (12), umfassend mindestens eine Stereoskopie-Kamera, die ausgestaltet ist, die Ausrichtung des Gesichts und/oder des Blicks eines Gesprächsteilnehmers zu erkennen.

11. System (14) zur Hilfe beim Verfolgen einer Konversation mit einer Vielzahl von Gesprächsteilnehmern für eine hörbehinderte Person (2), umfassend:
eine Informatikeinrichtung (3) nach Anspruch 9,
und ein System zur Erkennung der Gesichtsausrichtung (10), umfassend mindestens ein System zur Geolokalisierung und mindestens ein Gyrometer und/oder einen Beschleunigungsmesser, die ausgestaltet sind, den Ort eines Gesprächsteilnehmers und die Ausrichtung seines Gesichts in Bezug auf die anderen Gesprächsteilnehmer zu bestimmen.

## Claims

1. Method for assisting in following a conversation with a plurality of speakers (1), each one possibly belonging to at least one conversation group, for a hearing-impaired person (2) provided with computer equipment (3),
said computer equipment being connected to at least one voice emission module (4) formed by directive loudspeakers, to at least one display device (5), to at least one module (6) for converting voice signals into text signals, to at least one voice activity detection system (7) and to at least one locating device,
said method comprising the following steps implemented by said computer equipment:
- acquiring (E1) a signal representative of a voice activity of a first speaker among the plurality of speakers, using said voice activity detection system (7),
- acquiring (E2) a signal characterising a behaviour of a second speaker among the plurality of speakers in response to said voice activity of said first speaker,
- determining (E3) that the first and second speakers belong to the same conversation group, referred to as first conversation group, based on the signals acquired for the first speaker and the second speaker,
- selecting (E4) the first conversation group from among said conversation groups,
**characterised in that** the computer equipment implements the following steps:
- determining (E5) a voice playback mode for said first conversation group selected,
- when the voice playback mode has been determined for the first conversation group: transmitting (E6), to the voice emission module (4), voice signals acquired for the speakers belonging to the first conversation group selected, for emitting said voice signals, with the step of transmitting further comprising:
- locating the hearing-impaired person by the locating system,
- determining, by the emission module (4), at least one emission zone of the voice signals in the vicinity of the location of the hearing-impaired person, from among a plurality of emission zones, with an emission zone being associated with at least one loudspeaker,
- allocating at least one emission zone, from among the determined zones, to the hearing-impaired person (2) by the emission module (4), and
- emitting voice signals in said zone.

2. Method according to one of the preceding claims, wherein an emission zone is allocated to said hearing-impaired person (2), if the latter is not allocated beforehand to a second person.

3. Method according to the preceding claim, wherein the step of allocating, by the emission module (4), at least one emission zone comprises allocating to said hearing-impaired person (2) emission zones positioned between a first zone allocated to said hearing-impaired person (2) and a second zone allocated to a second person.

4. Method for assisting in following a conversation according to one of the preceding claims, wherein said computer equipment implements the following steps:
- determining (E5) a text playback mode for said first conversation group selected,
- when the text playback mode has been determined for the first conversation group: controlling the display (E7), on the display device, of text signals obtained by converting voice signals acquired for the speakers belonging to the first conversation group selected, using the module (6) for converting signals.

5. Method for assisting in following a conversation according to one of the preceding claims,
said computer equipment being furthermore connected to at least one system for detecting the orientation of a face (10), and to synchronisation equipment (11) configured to determine a correlation between signals relating to different speakers,
wherein:
- the step of acquiring (E1) a signal representative of a voice activity of a first speaker comprises determining a first binary variable representative of a voice activity of said first speaker,
- the step of acquiring (E2) a signal characterising a behaviour of a second speaker comprises determining a second binary variable representative of detecting an orientation of the face of the second speaker in the direction of the first speaker using the system for detecting the orientation of a face,
- the step of determining (E3) that the first and second speakers belong to the same conversation group comprises determining a correlation using said synchronisation equipment between said first and second variables.

6. Method for assisting in following a conversation according to one of the preceding claims,
said computer equipment being furthermore connected to at least one system for detecting the orientation of the look (12), and to synchronisation equipment (11) configured to determine a correlation between signals relating to different speakers,
wherein:
- the step of acquiring (E1) a signal representative of a voice activity of a first speaker comprises determining a first binary variable representative of a voice activity of said first speaker,
- the step of acquiring (E2) a signal characterising a behaviour of a second speaker comprises determining a third binary variable representative of detecting an orientation of the look of the second speaker in the direction of the first speaker using the system for detecting the orientation of a look,
- the step of determining (E3) that the first and second speakers belong to the same conversation group comprises determining a correlation using said synchronisation equipment between said first and third variables.

7. Method for assisting in following a conversation according to one of the preceding claims, wherein:
- the step of acquiring (E2) a signal characterising a behaviour of a second speaker comprises determining using said voice activity detection system a voice activity of the second speaker,
- the belonging (E3) of the first and of the second speaker to the same conversation group is determined based on a delay between an end of the voice activity of the first speaker and a beginning of the voice activity of the second speaker.

8. Computer program product comprising code instructions for executing a method according to any preceding claim when this program is executed by the computer equipment of claim 9.

9. Computer equipment (3), for assisting in following a conversation with a plurality of speakers (1), for a hearing-impaired person (2) configured to be connected to at least one voice emission module (4), to at least one display device (5) and to at least one module for converting voice signals into text signals (6) and to at least one voice activity detection system (7),
said computer equipment (3) being furthermore configured to implement the steps of the method according to any of claims 1 to 8.

10. System (14) for assisting in following a conversation with a plurality of speakers for a hearing-impaired person (2) comprising:
computer equipment (3) according to the preceding claim,
and a system for detecting an orientation of the face (10) and/or the look (12) comprising at least one stereoscopic camera configured to detect the orientation of the face and/or of the look of a speaker.

11. System (14) for assisting in following a conversation with a plurality of speakers for a hearing-impaired person (2) comprising:
computer equipment (3) according to claim 9,
and a system for detecting an orientation of the face (10) comprising at least one geolocation system and at least one gyrometer and/or accelerometer configured to determine the location of a speaker and the orientation of their face with respect to the other speakers.
